# EUROPEAN PATENT APPLICATION

(11) **EP 4 745 184 A1**
(43) Date of publication of application: **20.05.2026**
(21) Application number: 24213931.9
(22) Date of filing: 19.11.2024
(51) Int. Cl.: C08J 11/16, B01J 23/42, B01J 23/44, B01J 23/46, B01J 23/755

(54) **REDUCTIVE DEPOLYMERIZATION METHOD OF POLYCARBONATES**

(71) Applicant: VITO NV, 2400 Mol (BE)
(72) Inventor: MARQUEZ ADMADE, Carlos, 2400 Mol (BE); AERTS, Annelore, 2400 Mol (BE); FEGHALI, Elias, 2400 Mol (BE); ELST, Kathy, 2400 Mol (BE); VANBROEKHOVEN, Karolien, 2400 Mol (BE); VAN GEEM, Kevin, 9000 Gent (BE)
(74) Representative: Arnold & Siedsma

(57) **Abstract**

The present invention generally relates to the field of metal catalyzed depolymerization, and in particular provides a method for reductive depolymerization of polymer compositions containing polycarbonate in the presence of a heterogeneous metal catalyst. The present invention also provides a heterogeneous nickel catalyst suitable for reductive depolymerization of polymers, a method to prepare the catalyst, as well as use of the catalyst in reductive depolymerization methods.

## Description

### FIELD OF THE INVENTION

The present invention generally relates to the field of metal catalyzed depolymerization, and in particular provides a method for reductive depolymerization of polymer compositions containing polycarbonate in the presence of a heterogeneous metal catalyst. The present invention also provides a heterogeneous nickel catalyst suitable for reductive depolymerization of polymers, a method to prepare the catalyst, as well as use of the catalyst in reductive depolymerization methods.

### BACKGROUND TO THE INVENTION

Polycarbonate (PC) is one of the most commercially used polymers in the world, with its global production reaching an estimate of 5 million tons annually by 2022, mostly as bisphenol A (BPA) polycarbonate. Polycarbonate is among others known for its impact strength, heat resistance, transparency and dimensional stability.

Recycling of polycarbonate is typically performed via three different routes, being mechanical recycling, thermochemical recycling (pyrolysis) and chemical recycling. While mechanical recycling avoids the use of chemical methods, such as the use of solvents and chemicals, it is known to provide recycled polycarbonate with deteriorated properties, such as decreased impact resistance. To provide recycled polycarbonate with close to or the same as its original properties, polycarbonate can be depolymerized to its monomer, such as BPA, either by chemical methods or by thermochemical recycling. While thermochemical recycling has the advantage that it can deal with high molecular weight polymers, the selectivity towards the monomer and the large amount of byproducts still poses a challenge. In contrast, chemical methods are capable of depolymerizing BPA polycarbonate to provide its monomer BPA with a better selectivity. Depending on the type of depolymerization, such as hydrolysis, alcoholysis or reductive depolymerization, the reaction provides carbon dioxide, an alkyl carbonate or methanol as a byproduct to the monomer (BPA), respectively.

In particular, reductive depolymerization of polycarbonate with homogeneous metal catalysts (e.g. Ir-, Ru- and Fe-pincer complexes) in the presence of H₂, is known. Enthaler et al. (ChemistryOpen, 2020, 9, 818). reported the reductive or hydrogenative depolymerization of BPA polycarbonate in THF with an Fe-pincer catalyst at 120 °C and 45 bar Hz.

These known methods, however, have the drawback that it is difficult to recover the catalyst, and that laborious work-up is needed to isolate the desired monomer.

It is therefore an object of the present invention to provide an improved method for reductive depolymerization of polymer compositions containing polycarbonate, compared to the methods known in the state of the art, or at least provide one or more alternative methods.

### SUMMARY OF THE INVENTION

In a first aspect, the present invention provides a method for reductive depolymerization of a polymer composition containing polycarbonate, the method comprising the step of:
a) heating a mixture of the polymer composition containing polycarbonate, an organic solvent, a heterogeneous metal catalyst, and a source of H₂, for a first reaction time of at least 1 hour, at a first reaction temperature of at least 100 °C;
wherein the heterogeneous metal catalyst comprises a metal selected from Ni, Ru, Rh, Ir, Pd, and Pt, and a support material.

It was found that the method as defined herein, enables depolymerization of polycarbonate, in particular BPA polycarbonate, to provide the monomer BPA with a good selectivity. The method as defined herein has the advantage that the heterogeneous metal catalyst may be easily recovered from the reaction mixture. It was moreover found that the recovered heterogeneous metal catalyst may be reused multiple times in the method as defined herein, with only limited loss of productivity or selectivity.

In an embodiment, the present invention provides the reductive depolymerization method as defined herein, wherein the support material comprises alumina, in particular wherein the support material is selected from alumina (Al₂O₃) and silica/alumina (SiO₂/Al₂O₃).

In an embodiment, the present invention provides the reductive depolymerization method as defined herein, wherein the loading of the metal in the heterogeneous metal catalyst is at least 0.5 wt.%, based on the total weight of the heterogeneous catalyst, preferably at least 1 wt.%, more preferably from 2 to 70 wt.%, even more preferably from 3 to 50 wt.%, yet even more preferably from 4 to 20 wt.%, yet even more preferably from 5 to 15 wt.%, most preferably from 7.5 to 12.5 wt.%.

In an embodiment, the present invention provides the reductive depolymerization method as defined herein, wherein the loading of the metal in step a) is at least 0.0001 wt.%, relative to the weight of the polycarbonate, preferably from 0.001 to 10 wt.%, more preferably from 0.01 to 5.0 wt.%, even more preferably from 0.25 to 2.0 wt.%, yet even more preferably from 0.5 to 1.5 wt.%.

In an embodiment, the present invention provides the reductive depolymerization method as defined herein, wherein the mixture in step a) is pressurized to an initial hydrogen (H₂) pressure from 1 to 40 bar preferably from 5 to 35 bar, more preferably from 10 to 30 bar, even more preferably from 15 to 25 bar, yet even more preferably from 18 to 22 bar; and subsequently heated.

In an embodiment, the present invention provides the reductive depolymerization method as defined herein, wherein the organic solvent comprises a hydrogen donor, in such as isopropanol or formic acid, in particular wherein the hydrogen donor is the organic solvent.

In an embodiment, the present invention provides the reductive depolymerization method as defined herein, wherein the heterogeneous metal catalyst is a nickel (Ni) on alumina (Al₂O₃) catalyst; and wherein the loading of nickel, based on the total weight of the heterogeneous nickel on alumina catalyst, is from 5 to 15 wt.%.

In a second aspect, the present invention provides a heterogeneous metal catalyst for reductive depolymerization of polymers, comprising nickel and a support material comprising alumina; and wherein the loading of nickel in the heterogeneous metal catalyst is from 1 to 60 wt.%, preferably from 2 to 55 wt.%, more preferably from 3 to 50 wt.%, even more preferably from 4 to 20 wt.%, yet even more preferably from 5 to 15 wt.%.

It was found that the heterogeneous nickel catalyst as defined herein, is particularly efficient in the reductive depolymerization of polymer compositions comprising polycarbonate, and may lead to an improved conversion, conversion rate and/or selectivity towards the monomer (BPA) in said reductive depolymerization.

In an embodiment, the present invention provides the heterogeneous nickel catalyst as defined herein, wherein at least part of the nickel is present as metallic nickel (Ni°), in particular as metallic nickel particles.

In an embodiment, the present invention provides the heterogeneous nickel catalyst as defined herein, wherein the metallic nickel particles having an average particle size, as determined by TEM, from 3 to 6 nm, preferably from 3.5 to 5 nm, more preferably from 4 to 4.5 nm.

In a third aspect, the present invention provides a method for preparing a heterogeneous nickel catalyst as defined herein, the method comprising the steps of:
a) impregnating a support material with an aqueous solution comprising nickel ions; and
b) calcining the impregnated support material at a calcining temperature of at least 400 °C, for a second reaction time of at least 2 hours, thereby providing the heterogeneous nickel catalyst;
wherein the amount of the nickel ions, relative to the weight of the support material, is from 1 to 60 wt.%, preferably from 2 to 55 wt.%, more preferably from 3 to 50 wt.%, even more preferably from 4 to 20 wt.%, yet even more preferably from 5 to 15 wt.%.

In an embodiment, the present invention provides the heterogeneous nickel catalyst preparation method as defined herein, wherein the support material comprises alumina, in particular wherein the support material is alumina.

In an embodiment, the present invention provides the heterogeneous nickel catalyst preparation method as defined herein, comprising the further steps of:
c) heating the heterogeneous nickel catalyst obtained in step b) in a reducing atmosphere to a maximal reduction temperature of at most 1000 °C for a first reduction time, thereby providing the heterogeneous catalyst, wherein at least part of the nickel is present as metallic nickel (Ni°); and
d) cooling down the heterogeneous catalyst obtained in step c).

In an embodiment, the present invention provides the heterogeneous nickel catalyst preparation method as defined herein, wherein step c) further comprises maintaining the heterogeneous catalyst at the maximal reduction temperature for a second reduction time.

In an embodiment, the present invention provides the heterogeneous nickel catalyst preparation method as defined herein, wherein in step c) the heterogeneous nickel catalyst obtained in step b) is heated under a flow of He and H₂; and wherein the flow of He and H₂ is independently selected from 20 to 200 Standard Cubic Centimetres per Minute (sccm), preferably from 30 to 180 sccm, more preferably from 40 to 160 sccm, even more preferably from 50 to 150 sccm.

In a fourth aspect, the present invention provides a heterogeneous nickel catalyst obtainable by the catalyst preparation method as defined herein.

In a fifth aspect, the present invention provides a use of the heterogeneous catalyst as defined herein, or as prepared by the method as defined herein, for the reductive depolymerization of polymers.

### BRIEF DESCRIPTION OF THE DRAWINGS

With specific reference now to the figures, it is stressed that the particulars shown are by way of example and for purposes of illustrative discussion of the different embodiments of the present invention only. They are presented in the cause of providing what is believed to be the most useful and readily description of the principles and conceptual aspects of the invention. In this regard, no attempt is made to show structural details of the invention in more detail than is necessary for a fundamental understanding of the invention. The description provided with the drawings makes apparent to those skilled in the art how the several forms of the invention may be embodied in practice.

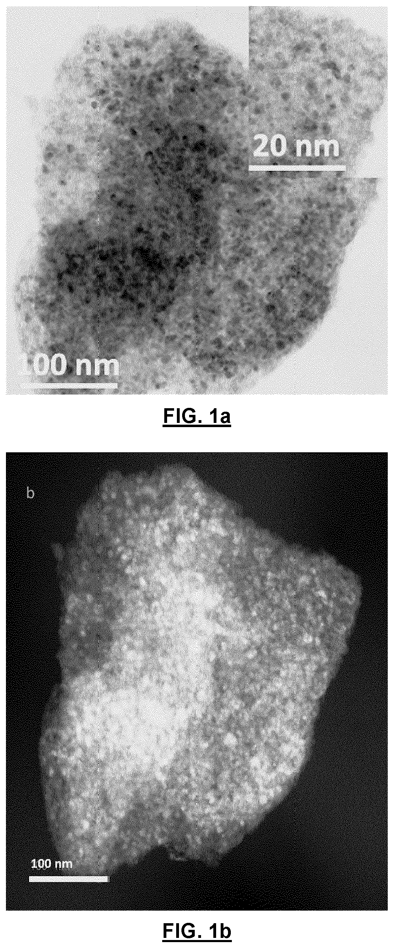

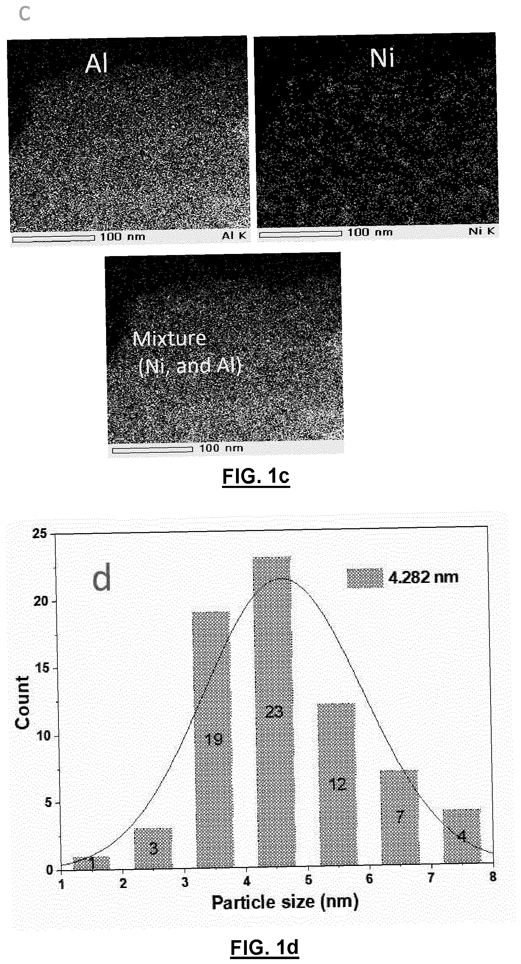

**Figures 1a, 1b****,** **1c, and 1d****,** also abbreviated as **FIG. 1a****-d,** provide a TEM image in Light Mode, a TEM image in Dark Mode, a representation of elemental mapping, and a representation of a histogram, respectively, of a nickel catalyst prepared according to example 2a (5Ni⁰/Al₂O₃ - 500).

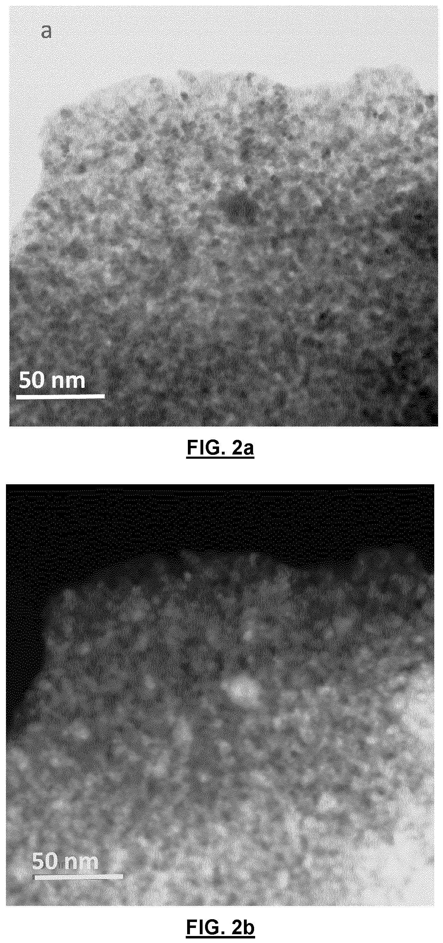

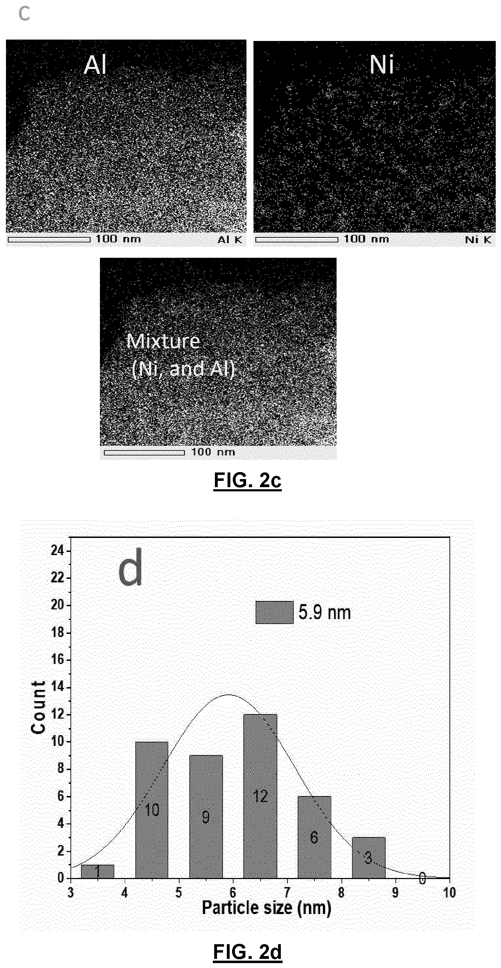

**Figures 2a, 2b****,** **2c, and 2d****,** also abbreviated as **FIG. 2a****-d,** provide a TEM image in Light Mode, a TEM image in Dark Mode, a representation of elemental mapping, and a representation of a histogram, respectively, of a nickel catalyst prepared according to example 2e (5Ni⁰/Al₂O₃ - 800).

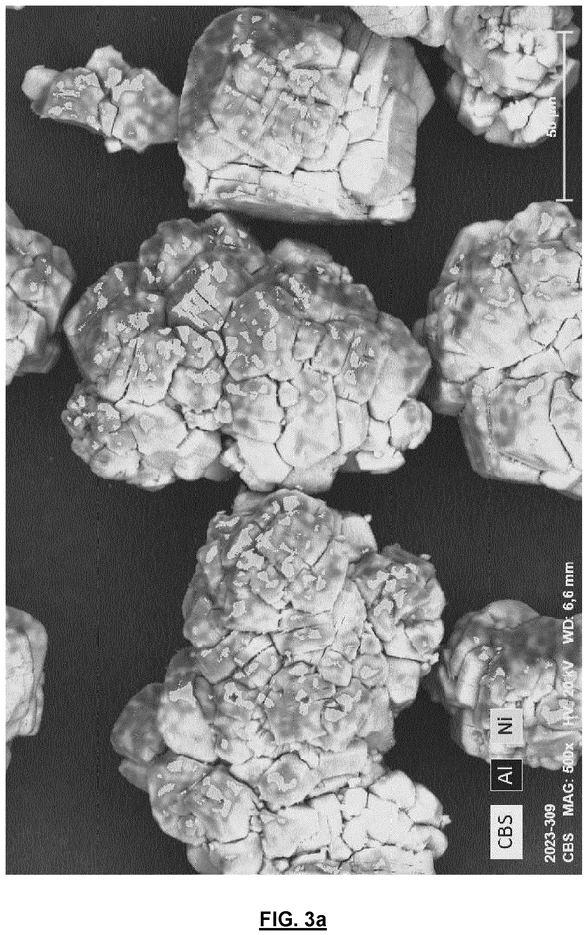

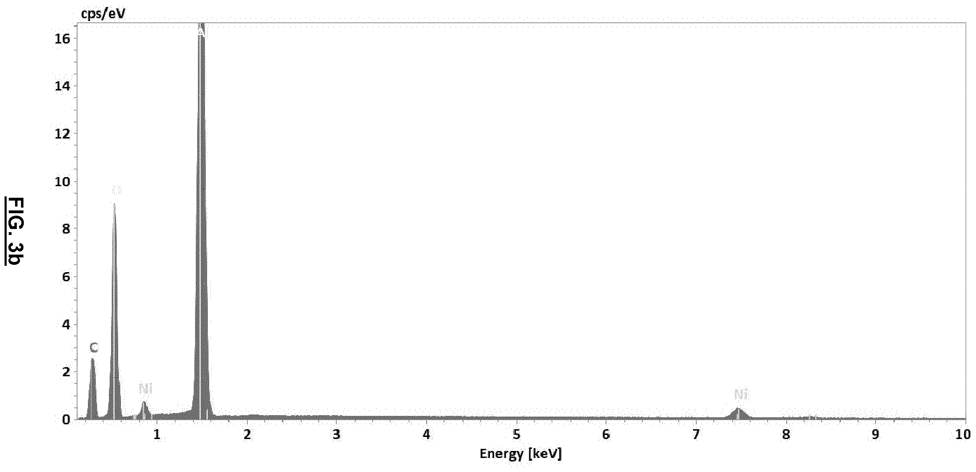

**Figures 3a****, and** **3b****,** also abbreviated as **FIG. 3a****-b,** provide a SEM image and elemental mapping of Al and Ni and an energy dispersive X-ray spectroscopy (EDS) spectrum of a nickel catalyst prepared according to example 2a (5Ni⁰/Al₂O₃).

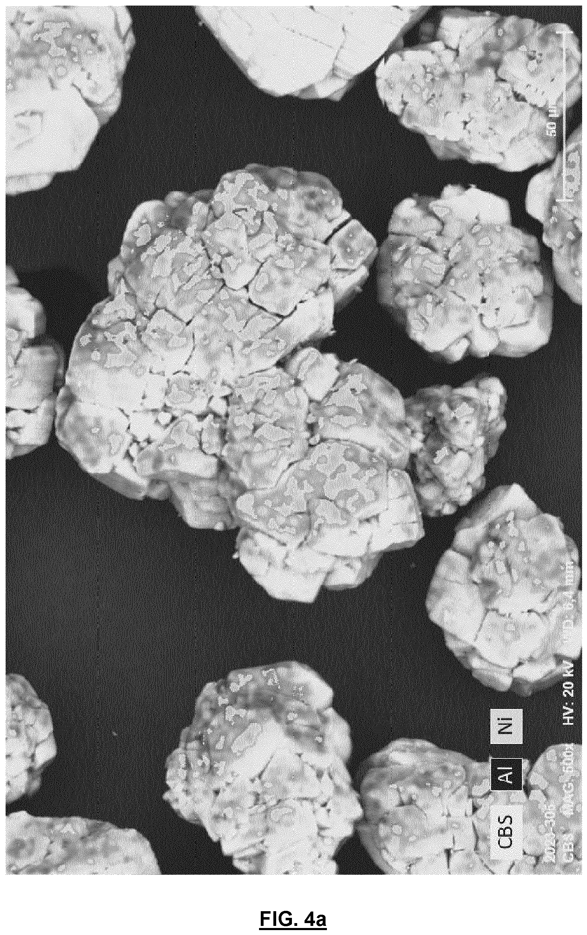

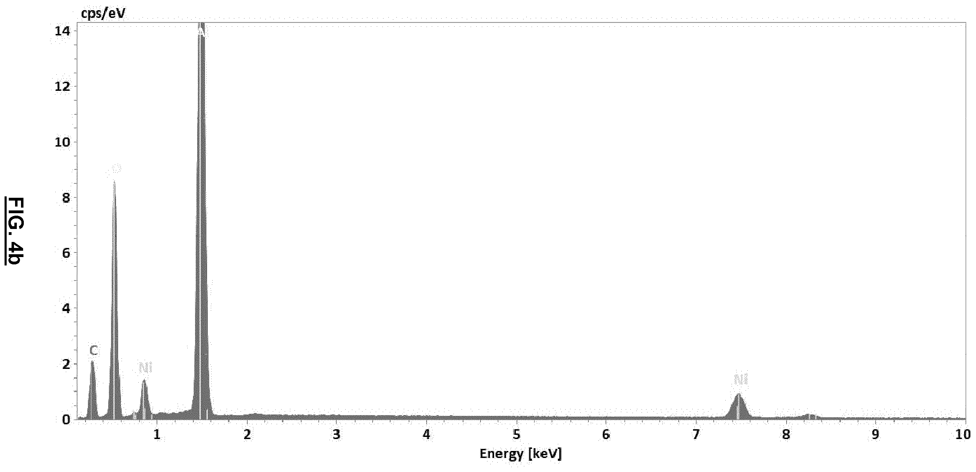

**Figures 4a****, and** **4b** also abbreviated as **FIG. 4a****-b,** provide a SEM image and elemental mapping of Al and Ni and an energy dispersive X-ray spectroscopy (EDS) spectrum of a nickel catalyst prepared according to example 2b (10Ni⁰/Al₂O₃).

### DETAILED DESCRIPTION OF THE INVENTION

The present invention will now be further described. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

In a first aspect, the present invention provides a method for reductive depolymerization of a polymer composition containing polycarbonate, the method comprising a step a) of heating a mixture of the polymer composition containing polycarbonate, an organic solvent, a heterogeneous metal catalyst, and a source of H₂, for a first reaction time, at a first reaction temperature, thereby providing a reaction mixture comprising a polycarbonate monomer, in particular BPA.

The terms "reductive depolymerization" and "hydrogenative depolymerization", in the context of the present invention, are synonymously used to refer to a depolymerization reaction in the presence of a source of hydrogen (Hz). As mentioned hereinbefore, the reductive depolymerization of BPA polycarbonate ideally provides the monomer BPA, with methanol as the only byproduct. In general, hydrogenation can be divided in two main routes, being hydrogenation in a(n) (pressurized) atmosphere mainly composed of hydrogen (H₂) gas, also known as 'classical' hydrogenation, or transfer hydrogenation wherein hydrogen donors, such as formic acid or isopropanol, provide H₂ in situ. The term "a source of hydrogen", in the context of the present invention, may therefore refer to an atmosphere comprising H₂, in particular to an atmosphere essentially consisting of H₂, more in particular to a pressurized H₂ atmosphere, or a compound capable of providing H₂ in situ, also known as hydrogen donor, such as isopropanol or formic acid.

In the context of the current invention, the term "at least part of" refers to a definite, non-zero, portion of the item it refers to. The term "at least part of" may therefore refer to 1 %, 2 %, 3 %, 4 %, 5 %, 10 %,15 %, 20 %, 25 %, 30 %, 40 %, 50 %, 60 %, 70 %, 75 %, 80 %, 85 %, or essentially all, such as at least 90 %, 95 %, 99 %, and even 100 %, of the item it refers to.

In the context of the present invention, the term "polymer composition containing polycarbonate" refers to polymer compositions that at least partly contain polycarbonate. The polymer composition may contain one type of polycarbonate, such as BPA polycarbonate, but it may also contain different types of polycarbonate and/or other polymers, such as ABS such as a polycarbonate blend. In the method as defined herein, the polycarbonate may have any molecular weight in which the polycarbonate is at least partly soluble in the organic solvent. Preferably, the polymer composition mainly consists of polycarbonate and may further consist of additives typically used in polycarbonate applications, such as impact modifiers, UV stabilizers, and the like. In particular, the polymer composition containing polycarbonate contains end-of-life polycarbonate, which is a known term in the art, and preferably mainly consists of end-of-life polycarbonate. Preferably, the polymer composition containing polycarbonate mainly consists of end-of-life polycarbonate, and again may comprise additives, as mentioned above.

In the context of the present invention, the term "heterogeneous metal catalyst" refers to a composition comprising a metal and a support material, in particular to a metal which is physically adsorbed to a support material. Methods to prepare heterogeneous metal catalysts are known in the art, and for instance include impregnating the support material with a solution containing one or more different metal ions, followed by one or more heating steps.

The method as defined herein may be performed in any reaction vessel suitable for the reaction conditions described herein. Preferably, the reaction vessel can be flushed and/or pressurized with a gas atmosphere, such as argon, nitrogen, hydrogen, or any combination of two or more thereof. When the mixture in the reaction vessel is heated at a first reaction temperature, as described herein, the pressure in the reaction vessel may rise. When the reaction vessel was only flushed with a gas atmosphere, the pressure in the reaction vessel during heating will be the autogenous pressure. When the reaction vessel was pressurized with a gas atmosphere, the pressure in the reaction vessel during heating can be higher than the autogenous pressure.

The method as defined herein is not limited to a particular metal comprised in the heterogeneous metal catalyst. It was however found that specific metals may be preferred, for instance due to their affinity for H₂. In a preferred embodiment, the present invention provides the reductive depolymerization method as defined herein, wherein the heterogeneous metal catalyst comprises a metal selected from Ni, Ru, Rh, Ir, Pd, and Pt. In a particular embodiment, the present invention provides the reductive depolymerization method as defined herein, wherein the heterogeneous metal catalyst comprises a metal selected from Ni, Ru, and Pd.

The method as defined herein is also not limited to a particular support material comprised in the heterogeneous metal catalyst. It was however found that specific support materials may be preferred. In embodiments, the present invention provides the reductive depolymerization method as defined herein, wherein the support material is selected from carbon, graphite, alumina, silica, calcium carbonate, barium sulphate, and any combination of two or more thereof. When referring to a combination of two or more support materials, it may refer to a mixture of two or more support obtained by physically mixing the two support materials, or it may refer to a chemically obtained combination, such as for example silica/alumina (SiO₂/Al₂O₃).

It was further found that particular combinations of metals and support materials may be preferred. In a specific embodiment, the present invention provides the reductive depolymerization method as defined herein, wherein the heterogeneous catalyst is selected from ruthenium (Ru) on alumina (Al₂O₃), palladium (Pd) on alumina (Al₂O₃), nickel (Ni) on silica/alumina (SiO₂/Al₂O₃), or nickel (Ni) on alumina (Al₂O₃). In particular, Ru, Pd and/or Ni are mainly present in their metallic form (Ru⁰, Pd⁰, Ni⁰).

The method as defined herein is furthermore not limited to a particular loading of the metal in the heterogeneous metal catalyst. However, it was found that a particular loading may lead to an improved conversion, conversion rate and/or selectivity. Preferably, the loading of the metal in the heterogeneous metal catalyst, based on the total weight of the heterogeneous metal catalyst, is at least 0.5 wt.%, such as at least 0.6 wt.%, at least 0.7 wt.%, at least 0.8 wt.%, at least 0.9 wt.%, at least 1.0 wt.%, at least 1.5 wt.%, at least 2.0 wt.%, at least 2.5 wt.%, at least 3.0 wt.%, at least 4.0 wt.%, at least 5.0 wt.%. Preferably, the loading of the metal in the heterogeneous metal catalyst, based on the total weight of the heterogeneous metal catalyst, is at most 50 wt.%, such as at most 45 wt.%, at most 40 wt.%, at most 35 wt.%, at most 30 wt.%, at most 25 wt.%, at most 20 wt.%, at most 15 wt.%, at most 10 wt.%, at most 9 wt.%, at most 8 wt.%, at most 7 wt.%, at most 6 wt.%. In an embodiment, the present invention provides the reductive depolymerization method as defined herein, wherein the loading of the metal in the heterogeneous metal catalyst is at least 0.5 wt.%, based on the total weight of the heterogeneous catalyst, preferably at least 1 wt.%, more preferably from 2 to 70 wt.%, even more preferably from 3 to 50 wt.%, yet even more preferably from 4 to 20 wt.%, yet even more preferably from 5 to 15 wt.%, yet even more preferably from 7.5 to 12.5 wt.%.

In a specific embodiment, the present invention provides the reductive depolymerization method as defined herein, wherein the heterogeneous catalyst is selected from ruthenium (Ru) on alumina (Al₂O₃) with a loading of about 5 wt.%, palladium (Pd) on alumina (Al₂O₃) with a loading of about 5 wt.%, or nickel (Ni) on silica/alumina (SiO₂/Al₂O₃) with a loading of about 66 wt.%.

The method as defined herein is not limited to a particular loading of the heterogeneous metal catalyst in the mixture heated in step a) of the depolymerization method as defined herein. It was however found that a particular loading may lead to an improved conversion, conversion rate and/or selectivity. Preferably, the loading of the heterogeneous metal catalyst in step a), relative to the weight of the polycarbonate, is at least 0.001 wt.%, such as at least 0.002 wt.%, at least 0.005 wt.%, at least 0.01 wt.%, at least 0.02 wt.%, at least 0.03 wt.%, at least 0.04 wt.%, at least 0.05 wt.%, at least 0.10 wt.%, at least 0.15 wt.%, at least 0.20 wt.%, at least 0.25 wt.%, at least 0.3 wt.%, at least 0.4 wt.%, at least 0.5 wt.%, at least 0.6 wt.%, at least 0.7 wt.%, at least 0.8 wt.%, at least 0.9 wt.%, at least 1.0 wt.%, at least 1.5 wt.%, at least 2.0 wt.%, at least 2.5 wt.%, at least 3.0 wt.%, at least 4.0 wt.%, at least 5.0 wt.%. Preferably, the loading of the heterogeneous metal catalyst in step a), relative to the weight of the polycarbonate, is at most 50 wt.%, such as at most 45 wt.%, at most 40 wt.%, at most 35 wt.%, at most 30 wt.%, at most 25 wt.%, at most 20 wt.%, at most 15 wt.%, at most 10 wt.%, at most 9 wt.%, at most 8 wt.%, at most 7 wt.%, at most 6 wt.%. In a particular embodiment, the present invention provides the reductive depolymerization method as defined herein, wherein the loading of the heterogeneous metal catalyst in step a), relative to the weight of the polycarbonate, is from 0.001 to 25 wt.%, preferably from 0.005 to 20 wt.%, more preferably from 0.01 to 15 wt.%, even more preferably from 0.05 to 12.5 wt.%, yet even more preferably from 0.10 to 10 wt.%, yet even more preferably from 0.25 to 7.5 wt.%, yet even more preferably from 0.5 to 5 wt.%, yet even more preferably from 1.0 to 2.5 wt.%.

It was also found that when the source of hydrogen is H₂, the loading of the heterogeneous metal catalyst in step a), relative to the weight of the polycarbonate, is preferably at least 1.0 wt.% and at most 25 wt.%. In a particular embodiment, the present invention provides the reductive depolymerization method as defined herein, wherein the source of hydrogen is H₂, and wherein the loading of the heterogeneous metal catalyst in step a), relative to the weight of the polycarbonate, is from 1.0 to 25 wt.%, preferably from 2.5 to 20 wt.%, more preferably from 5 to 15 wt.%, even more preferably from 7.5 to 12.5 wt.%.

It was further found that when the source of hydrogen is a hydrogen donor, such as isopropanol or formic acid, the loading of the heterogeneous metal catalyst in step a), relative to the weight of the polycarbonate, is preferably at least 0.001 wt.% and at most 25 wt.%. In a particular embodiment, the present invention provides the reductive depolymerization method as defined herein, wherein the source of hydrogen is a hydrogen donor, and wherein the loading of the heterogeneous metal catalyst in step a), relative to the weight of the polycarbonate, is from 0.001 to 25 wt.%, preferably from 0.005 to 10 wt.%, more preferably from 0.01 to 5 wt.%, even more preferably from 0.05 to 2.5 wt.%, yet even more preferably from 0.10 to 2 wt.%, yet even more preferably from 0.25 to 1.5 wt.%, yet even more preferably from 0.5 to 1.0 wt.%.

Loading of a metal in step a), relative to the weight of the polycarbonate, is consequently a result of a particular loading of a heterogeneous metal catalyst with a particular loading of a metal in the heterogeneous metal catalyst. For example, when 0.001 wt.% of a heterogeneous metal catalyst, relative to the weight of the polycarbonate, with a metal loading of 10 wt.%, is used in in step a) of the depolymerization method as defined herein, the loading of the metal in step a), relative to the weight of the polycarbonate, is 0.0001 wt.%.

Preferably, the loading of the metal in step a), relative to the weight of the polycarbonate, is at least 0.0001 wt.%, such as at least 0.0002 wt.%, at least 0.0005 wt.%, at least 0.001 wt.%, at least 0.002 wt.%, at least 0.003 wt.%, at least 0.004 wt.%, at least 0.005 wt.%, at least 0.010 wt.%, at least 0.015 wt.%, at least 0.020 wt.%, at least 0.025 wt.%, at least 0.03 wt.%, at least 0.04 wt.%, at least 0.05 wt.%, at least 0.06 wt.%, at least 0.07 wt.%, at least 0.08 wt.%, at least 0.09 wt.%, at least 0.10 wt.%, at least 0.15 wt.%, at least 0.20 wt.%, at least 0.25 wt.%, at least 0.3 wt.%, at least 0.4 wt.%, at least 0.5 wt.%. Preferably, the loading of the metal in step a), relative to the weight of the polycarbonate, is at most 10 wt.%, such as at most 9 wt.%, at most 8 wt.%, at most 7 wt.%, at most 6 wt.%, at most 5 wt.%, at most 4.5 wt.%, at most 4.0 wt.%, at most 3.5 wt.%, at most 3.0 wt.%, at most 2.5 wt.%, at most 2.0 wt.%, at most 1.5 wt.%, at most 1.0 wt.%, at most 0.9 wt.%, at most 0.8 wt.%, at most 0.7 wt.%, at most 0.6 wt.%.

In a particular embodiment, the present invention provides the reductive depolymerization method as defined herein, wherein the loading of the metal in step a) is at least 0.0001 wt.%, relative to the weight of the polycarbonate, preferably at least 0.0005 wt.%, more preferably from 0.001 to 10 wt.%, even more preferably from 0.005 to 7.5 wt.%, yet even more preferably from 0.01 to 5.0 wt.%, yet even more preferably from 0.025 to 4.0 wt.%, yet even more preferably from 0.05 to 3.0 wt.%, yet even more preferably from 0.10 to 2.5 wt.%, yet even more preferably from 0.25 to 2.0 wt.%, yet even more preferably from 0.5 to 1.5 wt.%, yet even more preferably from 0.75 to 1.0 wt.%.

The mixture in step a) of the depolymerization method as defined herein may be heated at any temperature suitable to depolymerize the polycarbonate into its monomer. It is however preferred to heat the mixture in step a) to a temperature of at least 100 °C. It was further found that a particular first reaction temperature may lead to an improved conversion, conversion rate and/or selectivity. In an embodiment, the present invention provides the reductive depolymerization method as defined herein, wherein the first reaction temperature is from 100 to 320 °C, preferably from 125 to 310 °C, more preferably from 150 to 300 °C, even more preferably from 175 to 290 °C, yet even more preferably from 200 to 280 °C, yet even more preferably from 220 to 270 °C, most preferably from 240 to 260 °C.

The mixture in step a) of the depolymerization method as defined herein may be heated for any amount time suitable to depolymerize the polycarbonate into its monomer. It is however preferred to heat the mixture in step a) for at least 1 hour. It was further found that a particular first reaction time may lead to an improved conversion and/or selectivity. Preferably, the first reaction time is at least 1 hour, such as at least 1.5 hours, at least 2 hours, at least 2.5 hours, at least 3 hours, at least 3.5 hours, at least 4 hours, at least 4.5 hours, at least 5 hours. Preferably, the first reaction time is at most 12 hours, such as at most 11 hours, at most 10 hours, at most 9 hours, at most 8 hours, at most 7.5 hours, at most 7 hours, at most 6.5 hours, at most 6 hours, at most 5.5 hours. In an embodiment, the present invention provides the reductive depolymerization method as defined herein, wherein the first reaction time is from 1 to 12 hours, preferably from 1.5 to 10 hours, more preferably from 2 to 8 hours, even more preferably from 2.5 to 7.5 hours, yet even more preferably from 4 to 6 hours.

When the source of hydrogen is H₂, the mixture in step a) of the depolymerization method as defined herein may be pressurized to any initial hydrogen (H₂) pressure suitable to at least partly depolymerize the polycarbonate. It was however found that a particular initial hydrogen pressure may be preferred to enhance the reaction rate and/or to improved the selectivity. In an embodiment, the present invention provides the reductive depolymerization method as defined herein, wherein the mixture in step a) is pressurized to an initial hydrogen (H₂) pressure from 1 to 40 bar, and subsequently heated. Preferably, the initial hydrogen (H₂) pressure is from 5 to 35 bar, more preferably from 10 to 30 bar, even more preferably from 15 to 25 bar, yet even more preferably from 18 to 22 bar.

The method as defined herein may be performed in any organic solvent suitable to at least partly dissolve the polycarbonate. It was however found that particular organic solvents are preferred, as the polycarbonate may be more readily dissolved in the organic solvent and/or the organic solvent may act as a source of hydrogen. In an embodiment, the present invention provides the reductive depolymerization method as defined herein, wherein the organic solvent is selected from an ether solvent, isopropanol, formic acid, or any combination of two or more thereof. In particular embodiments, the present invention provides the reductive depolymerization method as defined herein, wherein the ether solvent is a cyclic ether, in particular tetrahydrofuran.

When the source of hydrogen is a hydrogen donor, such as isopropanol or formic acid, the hydrogen donor may be used as the organic solvent, or may form a solvent mixture with the organic solvent. It was found that even low amounts of the hydrogen donor in the solvent mixture may lead to sufficient conversion of the polycarbonate depolymerization. This may allow to tailor the reaction conditions depending on the type of polycarbonate to be depolymerized. The amount of the hydrogen donor in the organic solvent (mixture) may for instance be at least 1 wt.%, such as at least 2 wt.%, at least 3 wt.%, at least 4 wt.%, at least 5 wt. %, at least 10 wt.%, or at least 15 wt.%. The amount of the hydrogen donor in the organic solvent (mixture) may for instance also be at most 50 wt.%, at most 60 wt.%, most 70 wt.%, at most 80 wt.%, at most 90 wt.%, at most 95 wt.%, at most 99 wt.%, and even 100 wt.%. In the case of 100 wt.%, the hydrogen donor is the organic solvent. In an embodiment, the present invention provides the reductive depolymerization method as defined herein, wherein the organic solvent is a solvent mixture comprising a hydrogen donor, such as isopropanol or formic acid; and wherein the amount of the hydrogen donor in organic solvent (mixture), is at least 1 wt.%, preferably from 5 to 99 wt.%, more preferably from 10 to 50 wt.%, even more preferably from 15 to 25 wt.%. In a preferred embodiment, the present invention provides the reductive depolymerization method as defined herein, wherein the organic solvent is a hydrogen donor, such as isopropanol or formic acid.

The embodiments wherein the source of hydrogen is H₂, or a hydrogen donor, such as isopropanol or formic acid, are not mutually exclusive. Indeed, it was found that a pressurized atmosphere of H₂ in combination with an organic solvent mixture comprising a hydrogen donor, such as isopropanol, may lead to an improved conversion, conversion rate and/or an enhanced selectivity.

It was furthermore found that when only a hydrogen donor is present as the source of hydrogen, it is preferred to allow the mixture in step a) of the depolymerization method as defined herein to develop an autogenous pressure during heating, compared to pressurizing the mixture with an inert gas, such as argon (Ar) or nitrogen (N₂).

The method as defined herein may be performed in any ratio of polycarbonate to organic solvent suitable to at least partly dissolve the polycarbonate. It was however found that a particular ratio may be preferred to enhance the dissolution of the polycarbonate. In an embodiment, the present invention provides the reductive depolymerization method as defined herein, wherein the ratio of the polycarbonate to the organic solvent, on a weight by weight basis, is at least 1 wt.%, preferably from 2 to 30 wt.%, more preferably from 3 to 25 wt.%, even more preferably from 4 to 20 wt.%, yet even more preferably from 5 to 15 wt.%.

In the context of the present invention, the terms "monomer selectivity", "BPA selectivity", "BPA monomer selectivity", and "selectivity towards the monomer" are synonymously used for the selectivity of the reductive depolymerization method, as defined herein, towards producing BPA, compared to byproducts, such as BPA dimers and trimers (BPA+), or degradation products, such as 4-cumylphenol (BPA-).

It was further found that a heterogeneous nickel (Ni) catalyst on a support material comprising alumina, such as silica/alumina (SiO₂/Al₂O₃), in particular wherein the support material is alumina (Al₂O₃), may lead to an improved conversion, conversion rate and/or selectivity towards the monomer (BPA). In a preferred embodiment, the present invention provides the reductive depolymerization method as defined herein, wherein the heterogeneous metal catalyst comprises nickel (Ni) on a support material comprising alumina (Al₂O₃), in particular wherein the support material essentially consists of alumina (Al₂O₃), more in particular wherein the support material is alumina (Al₂O₃). In a particular embodiment, the present invention provides the reductive depolymerization method as defined herein, wherein the heterogeneous metal catalyst is a nickel (Ni) on alumina (Al₂O₃) catalyst. In a more particular embodiment, the present invention provides the reductive depolymerization method as defined herein, wherein the heterogeneous metal catalyst is a nickel (Ni) on alumina (Al₂O₃) catalyst; and wherein the loading of nickel, based on the total weight of the heterogeneous nickel on alumina catalyst, is from 5 to 15 wt.%.

In a particular embodiment, the present invention provides the reductive depolymerization method as defined herein, wherein the source of hydrogen is H₂; wherein the heterogeneous metal catalyst is a nickel (Ni) on alumina (Al₂O₃) catalyst; wherein the loading of nickel, based on the total weight of the heterogeneous nickel on alumina catalyst, is from 5 to 15 wt.%; and wherein the loading of the heterogeneous nickel on alumina catalyst in step a), relative to the weight of the polycarbonate, is from 1.0 to 25 wt.%, preferably from 2.5 to 20 wt.%, more preferably from 5 to 15 wt.%, even more preferably from 7.5 to 12.5 wt.%.

In another particular embodiment, the present invention provides the reductive depolymerization method as defined herein, wherein the source of hydrogen is a hydrogen donor; wherein the heterogeneous metal catalyst is a nickel (Ni) on alumina (Al₂O₃) catalyst; wherein the loading of nickel, based on the total weight of the heterogeneous nickel on alumina catalyst, is from 5 to 15 wt.%; and wherein the loading of the heterogeneous nickel on alumina catalyst in step a), relative to the weight of the polycarbonate, is from 0.001 to 25 wt.%, preferably from 0.005 to 10 wt.%, more preferably from 0.01 to 5 wt.%, even more preferably from 0.05 to 2.5 wt.%, yet even more preferably from 0.10 to 2 wt.%, yet even more preferably from 0.25 to 1.5 wt.%, yet even more preferably from 0.5 to 1.0 wt.%.

While it was found that nickel in the heterogeneous nickel on alumina catalyst can be present as any nickel compound, such as nickel oxide, it is preferred that at least part of the nickel is present as nickel metal or metallic nickel (Ni°). In a preferred embodiment, the present invention provides the reductive depolymerization method as defined herein, wherein the heterogeneous metal catalyst comprises metallic nickel on a support material comprising alumina, in particular wherein the support material is alumina. In a particular embodiment, the present invention provides the reductive depolymerization method as defined herein, wherein the heterogeneous metal catalyst is a heterogeneous nickel (Ni) on alumina (Al₂O₃) catalyst; and wherein at least part of the nickel is present as metallic nickel (Ni°), in particular as metallic nickel particles. It is an advantage of the present embodiment that a higher selectivity may be obtained.

In an even more particular embodiment, the present invention provides the reductive depolymerization method as defined herein, wherein the heterogeneous metal catalyst is a nickel (Ni) on alumina (Al₂O₃) catalyst; wherein the loading of nickel, based on the total weight of the heterogeneous nickel on alumina catalyst, is from 5 to 15 wt.%; and wherein at least part of the nickel is present as metallic nickel (Ni°).

It further appeared that a particular size of the metallic nickel (Ni°) particles may lead to an enhanced conversion, conversion rate and/or selectivity. In a preferred embodiment, the present invention provides the reductive depolymerization method as defined herein, wherein the metallic nickel particles have an average particle size from 2 to 7 nm, preferably from 3 to 6 nm, more preferably from 3.5 to 5 nm, even more preferably from 4 to 4.5 nm. The average particle size can be determined by transmission electron microscopy (TEM), in particular by bright field scanning transmission electron microscopy (STEM).

In yet an even more particular embodiment, the present invention provides the reductive depolymerization method as defined herein, wherein the heterogeneous metal catalyst is a nickel (Ni) on alumina (Al₂O₃) catalyst; wherein the loading of nickel, based on the total weight of the heterogeneous nickel on alumina catalyst, is from 5 to 15 wt.%; wherein at least part of the nickel is present as metallic nickel (Ni°) particles; and wherein the metallic nickel particles have an average particle size from 4 to 6 nm.

In a second aspect, the present invention provides a heterogeneous metal catalyst for reductive depolymerization of polymer compositions, in particular for reductive depolymerization of polymer compositions containing polycarbonate. The heterogeneous metal catalyst as defined herein comprises nickel (Ni) and a support material, wherein the loading of nickel, based on the total weight of the heterogeneous metal catalyst, is from 1 to 60 wt.%, preferably from 2 to 55 wt.%, more preferably from 3 to 50 wt.%, even more preferably from 4 to 20 wt.%, yet even more preferably from 5 to 15 wt.%.

While the heterogeneous metal catalyst as defined herein may comprise any support material, such as carbon, graphite, alumina, silica, calcium carbonate, barium sulphate, or any combination of two or more thereof, it was found that a support material comprising alumina (Al₂O₃) maybe particularly suitable. In a preferred embodiment, the present invention provides the heterogeneous metal catalyst as defined herein, wherein the support material comprises alumina (Al₂O₃), such as silica/alumina (SiO₂/Al₂O₃), in particular wherein the support material essentially consists of alumina (Al₂O₃), more in particular wherein the support material is alumina (Al₂O₃).

In a specific embodiment, the present invention provides a heterogeneous nickel (Ni) on alumina (Al₂O₃) catalyst, wherein the loading of nickel, based on the total weight of the heterogeneous nickel on alumina catalyst, is from 5 to 15 wt.%.

As mentioned hereinbefore, the nickel in the heterogeneous nickel on alumina catalyst can be present as any nickel compound, such as nickel oxide. It is however preferred that at least part of the nickel is present as nickel metal or metallic nickel (Ni°). In a preferred embodiment, the present invention provides the heterogeneous metal catalyst as defined herein, wherein the heterogeneous metal catalyst comprises metallic nickel on a support material comprising alumina, in particular wherein the support material is alumina. In a particular embodiment, the present invention provides the heterogeneous metal catalyst as defined herein, wherein the heterogeneous metal catalyst is a heterogeneous nickel (Ni) on alumina (Al₂O₃) catalyst; and wherein at least part of the nickel is present as metallic nickel (Ni°), in particular as metallic nickel particles. It is an advantage of the nickel catalyst in the present embodiment that a higher selectivity may be obtained in a reductive depolymerization reaction wherein said catalyst is used.

In a more specific embodiment, the present invention provides a heterogeneous nickel (Ni) on alumina (Al₂O₃) catalyst, wherein the loading of nickel, based on the total weight of the heterogeneous nickel on alumina catalyst, is from 5 to 15 wt.%; and wherein at least part of the nickel is present as metallic nickel (Ni°).

As mentioned hereinbefore, it appeared that a particular size of the metallic nickel (Ni°) particles may lead to an enhanced conversion, conversion rate and/or selectivity when the heterogeneous nickel on alumina catalyst is used in a reductive depolymerization reaction. In a preferred embodiment, the present invention provides the heterogeneous metal catalyst as defined herein, wherein the metallic nickel particles have an average particle size from 2 to 7 nm, preferably from 3 to 6 nm, more preferably from 3.5 to 5 nm, even more preferably from 4 to 4.5 nm.

In an even more specific embodiment, the present invention provides a heterogeneous nickel (Ni) on alumina (Al₂O₃) catalyst, wherein the loading of nickel, based on the total weight of the heterogeneous nickel on alumina catalyst, is from 5 to 15 wt.%; wherein at least part of the nickel is present as metallic nickel (Ni°) particles; and wherein the metallic nickel particles have an average particle size from 4 to 6 nm, as determined by bright field scanning transmission electron microscopy (STEM), conducted using a JEOL JEM-2200FS, Cs-corrected microscope operated at 200 kV.

In a third aspect, the present invention provides a method for preparing the heterogeneous nickel catalyst, as defined herein, the method comprising the steps of:
a) impregnating a support material with an aqueous solution comprising nickel ions; and
b) calcining the impregnated support material at a calcining temperature, for a second reaction time, thereby providing the heterogeneous nickel catalyst.

In the catalyst preparation method as defined herein, the amount of nickel ions in the aqueous solution, relative to the weight of the support material, is from 1 to 60 wt.%, preferably from 2 to 55 wt.%, more preferably from 3 to 50 wt.%, even more preferably from 4 to 20 wt.%, yet even more preferably from 5 to 15 wt.%.

Calcining the impregnated support material in step b) of the catalyst preparation method as defined herein, is preferably performed at a temperature of at least 200 °C, more preferably at least 250 °C, even more preferably from 300 to 600 °C, yet even more preferably from 350 to 550 °C, most preferably from 400 to 500 °C. Calcining the impregnated support material in step b) of the catalyst preparation method as defined herein, is preferably performed for a reaction time of at least 1 hour, preferably from 2 to 6 hours, more preferably from 3 to 5 hours. In a particular embodiment, the present invention provides the heterogeneous nickel catalyst preparation method as defined herein, wherein calcining the impregnated support material in step b) is performed at a calcining temperature from 400 to 500 °C, for a second reaction time from 3 to 5 hours.

In a preferred embodiment, the present invention provides the heterogeneous nickel catalyst preparation method as defined herein, wherein the support material comprises alumina (Al₂O₃), such as silica/alumina (SiO₂/Al₂O₃), in particular wherein the support material essentially consists of alumina (Al₂O₃), more in particular wherein the support material is alumina (Al₂O₃).

It appeared that it may be beneficial to dry the impregnated support material in step a), before calcining the material in step b). In a particular embodiment, the present invention provides the heterogeneous metal catalyst preparation method as defined herein, wherein step a) further comprises drying the impregnated support material, before performing step b). Drying is preferably performed at a temperature from 100 to 150 °C.

The heterogeneous nickel catalyst obtained by the catalyst preparation method as defined herein, comprises nickel oxide (NiO) particles. It was found that heating the heterogeneous nickel catalyst, obtained by the catalyst preparation method a defined herein, in a reducing atmosphere provides a heterogeneous nickel catalyst comprising metallic nickel (Ni°) particles. As mentioned hereinbefore, use of a heterogeneous nickel catalyst comprising metallic nickel particles in a reductive depolymerization reaction may lead to a higher selectivity.

In a preferred embodiment, the present invention provides the heterogeneous nickel catalyst preparation method as defined herein, comprising the further step c) of heating the heterogeneous nickel catalyst obtained in step b) in a reducing atmosphere to a maximal reduction temperature of at most 1000 °C for a first reduction time, thereby providing the heterogeneous catalyst, wherein at least part of the nickel is present as metallic nickel (Ni°)

The method according to this embodiment is not limited to a particular reducing atmosphere, and any reducing atmosphere capable of reducing the nickel oxide (NiO) particles to metallic nickel (Ni°) particles may be used. It was however found that a flow of He and H₂ is particularly suitable to perform the reduction.

In a further embodiment, the present invention provides the heterogeneous metal catalyst preparation method as defined herein, wherein in step c) a flow of He and H₂ is used to provide the reducing atmosphere.

It was further found that the maximal reduction temperature in step c) of the catalyst preparation method as defined herein, may influence the size of the metallic nickel (Ni°) particles on the support material. In a preferred embodiment, the present invention provides the heterogeneous nickel catalyst preparation method as defined herein, wherein the maximal reduction temperature is from 300 to 1000 °C, preferably from 350 to 950 °C, more preferably from 400 to 900 °C, even more preferably from 450 to 850 °C, yet even more preferably from 500 to 800 °C.

The method according to this embodiment is not limited to a particular first reduction time, and any time suitable for reducing the nickel oxide (NiO) particles to metallic nickel (Ni°) particles may be used, such as 10 min, 1 hour, 2 hours, 3 hours, 4 hours, 5 hours, or more. It was however found that the heating rate of heating the heterogeneous nickel catalyst in step c) of the catalyst preparation method as defined herein, may influence the size of the metallic nickel (Ni°) particles on the support material. The first reduction time may therefore depend on the heating rate of raising the temperature from room temperature to the maximal reduction temperature. In a preferred embodiment, the present invention provides the heterogeneous nickel catalyst preparation method as defined herein, wherein in step c) heating to a maximal reduction temperature for a first reduction time is performed at a heating rate from 0.1 to 5 °C/min, preferably from 0.2 to 4 °C/min, more preferably from 0.3 to 3 °C/min, even more preferably from 0.4 to 2 °C/min, yet even more preferably from 0.5 to 1.5 °C/min.

It was moreover found that maintaining the heterogeneous nickel catalyst at the maximal reduction temperature for a second reduction time, in step c) of the catalyst preparation method as defined herein, may influence the size of the metallic nickel (Ni°) particles on the support material. In a preferred embodiment, the present invention provides the heterogeneous nickel catalyst preparation method as defined herein, wherein step c) further comprises maintaining the heterogeneous nickel catalyst at the maximal reduction temperature for a second reduction time. The second reduction preferably is at least 10 min, and preferably at most 5 hours. In a particular embodiment, the present invention provides the heterogeneous nickel catalyst preparation method as defined herein, wherein the second reduction time is from 0.5 to 4 hours, preferably from 1 to 3 hours.

In a specific embodiment, the present invention provides the heterogeneous nickel catalyst preparation method as defined herein, wherein in step c) the heterogeneous nickel catalyst obtained in step b) is heated under a flow of He and H₂, to a maximal reduction temperature from 500 to 800 °C for a first reduction time, at a heating rate from 0.5 to 1.5 °C/min, and maintained at the maximal reduction temperature for a second reduction time from 1 to 3 hours.

In a preferred embodiment, the present invention provides the heterogeneous nickel catalyst preparation method as defined herein, wherein in step c) the flow rate of the flow of He and H₂ is independently selected from 20 to 200 sccm, preferably from 30 to 180 sccm, more preferably from 40 to 160 sccm, even more preferably from 50 to 150 sccm.

In a further embodiment, the present invention provides the heterogeneous nickel catalyst preparation method as defined herein, comprising the further step d) of cooling down the heterogeneous nickel catalyst obtain in step c). Cooling down the heterogeneous nickel catalyst obtained in step c) is typically performed until room temperature is reached and may be performed by any suitable means at any suitable rate. It was however found that it may be beneficial to cool down the heterogeneous nickel catalyst obtained in step c), preferably to room temperature, at a fixed cooling rate to stabilize the metallic (Ni°) particles on the support material. In a preferred embodiment, the present invention provides the heterogeneous nickel catalyst preparation method as defined herein, wherein in step d) cooling down is performed at a cooling rate from 0.5 to 10 °C/min, preferably from 1 to 9 °C/min, more preferably from 2 to 8 °C/min, even more preferably from 3 to 7 °C/min, yet even more preferably from 4 to 6 °C/min.

In a more specific embodiment, the present invention provides the heterogeneous nickel catalyst preparation method as defined herein, comprising the further steps c) and d);
wherein in step c) the heterogeneous nickel catalyst obtained in step b) is heated:
   under a flow of He and H₂, at a flow rate from 50 to 150 sccm;
   to a maximal reduction temperature from 500 to 800 °C for a first reduction time, at a heating rate from 0.5 to 1.5 °C/min; and
   maintained at the maximal reduction temperature for a second reduction time from 1 to 3 hours, thereby providing the heterogeneous catalyst, wherein at least part of the nickel is
   present as metallic nickel (Ni°); and
wherein in step d) the heterogeneous nickel catalyst obtained in step c) is cooled down at a cooling rate from 4 to 6 °C/min.

In a further aspect, the present invention provides a heterogeneous nickel catalyst obtainable by the catalyst preparation method as defined herein.

In a further aspect, the present invention provides the use of heterogeneous nickel catalyst as defined herein, or prepared according to the catalyst preparation method as defined herein, in the reductive depolymerization of polymers or polymer compositions, in particular in the reductive depolymerization of polymer compositions comprising polycarbonate.

The compounds of the present invention can be prepared according to the reaction schemes provided in the examples hereinafter, but those skilled in the art will appreciate that these are only illustrative for the invention.

### EXAMPLES

### Materials

All chemicals were obtained from commercial sources and used as received, unless stated otherwise. Ruthenium on alumina (5 wt.%, "5Ru⁰/Al₂O₃") was purchased from Heraeus. Palladium on alumina (5 wt.%, "5Pd⁰/Al₂O₃"), aluminum oxide (Al₂O₃, fused, powder, primarily α-phase, 100-200 mesh) and Ni(NO₃)₂·6.H₂O were purchased from Sigma-Aldrich. Commercial polycarbonate with a purity of ≥99% and a *M*_{w} of 52 kg/mol was used.

### Analysis

### Gas Chromatography:

Products were analysed by gas chromatography (GC) in a system equipped with a combi-pal series injector, DB5-MS column (60 m x 0.25 mm ID x 0.25 mm), and a flame ionization detector (FID) operating at 310 °C. The Chromeleon software was used for the analysis. An automated injector injected 1 µL of sample with a split ratio 14.3 at a split flow 10. The injection port and initial oven temperatures were 300 °C and 40 °C, respectively. The oven temperature was increased and kept constant for 13 min at 265 °C, for a total run time of 30 min.

### X-ray diffraction:

X-ray diffraction patterns were collected on a Philips/Pnanlytical X'Pert Pro diffractometer using a Cu-Kα X-ray source (A = 0.15418 nm).

### N₂ Physisorption (BET area):

N₂ physisorption measurements were carried out at -196 °C using a Micromeritics TriStar II instrument. Prior to measurement, the catalyst was degassed at 300 °C for 6 h (ramp rate 10 °C/min) with a SMART Prep 065 under a N₂ atmosphere. The data was analyzed using Microactive software V3.00. The BET (Brunauer-Emmett-Teller) method was used to calculate the surface area. The Barrett-Joyner-Halenda (BJH) method was used to determine total pore volume (ml/g) and pore diameter (Å).

### Temperature programmed reduction (H₂-TPR):

In TPR analysis, reducibility of a catalyst is tested using hydrogen gas (10% H₂ + 90% Ar). In brief, 100 mg of the catalyst is loaded into a U-shaped quartz tube exposed to H₂ gas (60 ml/min) (Autochem 2920, Micromeritics) and heated from room temperature to 900 °C at a rate of 10 °C/min. A thermal conductivity detector is used to measure the outlet gas composition as a function of temperature and time.

### Scanning electron microscope - Energy-dispersive X-ray spectroscopy (SEM-EDS):

Scanning Electron microscopy (SEM) images were collected on a FEGFEI Nova NanoSEM 450 at an accelerating voltage of 5 kV. The distribution of the different elements was measured using energy dispersive X-ray (EDX) spectroscopy (QUANTAX 200 EDX, Bruker with an XFlash 5030 SDD detector).

### Transmission electron microscopy (TEM):

High-angle annular dark-field (HAADF) scanning transmission electron microscopy (STEM) and energy dispersive X-ray (EDX) analysis were performed using a JEOL ARM200F probe-corrected microscope, operated at 200 kV and equipped with a cold-field emission gun and the large-angle SDD-EDX detector (Centurio, JEOL), to determine the elemental distribution within the reduced samples. TEM samples were prepared by placing a droplet of the colloidal dispersion of the sample in isopropanol on a holey carbon-coated copper grid. Bright field scanning transmission electron microscopy (STEM), conducted using a JEOL JEM-2200FS, Cs-corrected microscope operated at 200 kV, was used to determine the particle size distribution of reduced samples. For each sample, a Lacey formvar/carbon film supported on a 200 mesh copper grid was immersed in the sample powder. After several minutes of contact time with the powder, the grid was removed and redundant powder was blown off before loading the grid into the microscope specimen holder.

### Example 1 - Preparation of NiO on alumina catalysts

Heterogeneous nickel oxide on alumina (NiO/Al₂O₃) catalysts with different metal loadings were prepared by dissolving appropriate amounts of nickel nitrate hexahydrate (Ni(NO₃)₂·6.H₂O) in 0.4 mL distilled water, and adding the aqueous solution to the corresponding amount of alumina. After addition of the aqueous solution, each of the impregnated alumina samples was dried overnight at 120 °C and calcined in an oven at 450 °C for 4 h to obtain nickel oxide on alumina catalysts (NiO/Al₂O₃).

Table 1 provides an overview of the reagents used to prepare nickel oxide on alumina (NiO-Al₂O₃) catalysts with 5, 10, 15, and 20 wt.% of nickel.

**Table 1**

| **Example** | **wt.% Ni** | **Al₂O₃ (g)** | **Ni(NO₃)₂·6.H₂O (g)** |
|---|---|---|---|
| 1a (5NiO/Al₂O₃) | 5 | 10 | 2.75 |
| 1b (10NiO/Al₂O₃) | 10 | 10 | 5.50 |
| 1c (15NiO/Al₂O₃) | 15 | 10 | 8.25 |
| 1d (20NiO/Al₂O₃) | 20 | 10 | 11.0 |

### Example 2 - Preparation of Ni⁰ on alumina catalysts

Heterogeneous metallic nickel on alumina (Ni⁰-Al₂O₃) catalysts, with different metal loadings, were prepared by reducing each of the heterogeneous nickel oxide on alumina (NiO-Al₂O₃) catalysts prepared according to example 1. In short, each of the NiO-Al₂O₃ catalysts (Ex. 1a-1d) were reduced under a flow of 100 sccm He + 100 sccm H₂ following a heating profile of 1 °C/min until either 500 or 800 °C was reached, then staying at that temperature for 2 h, before cooling down at 5 °C/h until room temperature was reached.

Table 2 provides an overview of the NiO-Al₂O₃ catalysts and conditions used to prepare metallic nickel on alumina (Ni⁰-Al₂O₃) catalysts with 5, 10, 15, and 20 wt.% of nickel, as well the average particle size of the nickel particles, determined by TEM.

**Table 2**

| **Example** | **NiO-Al₂O₃** | **Max. reduction T (° C)** | **wt.% Ni** | **Av. particle size dₚ (nm)** |
|---|---|---|---|---|
| 2a (5Ni⁰/Al₂O₃ - 500) | Ex. 1a | 500 | 5 | 4.2 |
| 2b (10Ni⁰/Al₂O₃ - 500) | Ex. 1b | 500 | 10 | n.d. |
| 2c (15Ni⁰/Al₂O₃ - 500) | Ex. 1c | 500 | 15 | n.d. |
| 2d (20Ni⁰/Al₂O₃ - 500) | Ex. 1d | 500 | 20 | n.d. |
| 2e (5Ni⁰/Al₂O₃ - 800) | Ex.1a | 800 | 5 | 5.9 |

### Example 3

To compare the performance of different commercial heterogeneous metal catalysts, and heterogeneous nickel catalysts as prepared in examples 1 and 2, in the reductive depolymerization of polycarbonate under 'classical' hydrogenation conditions, a reaction vessel was charged with 4.6 g of polycarbonate, heterogeneous metal catalyst, and 46 g of THF. After dissolution of the polycarbonate in the solvent, the reaction vessel was pressurized with H₂ (20 bar), closed, and heated to 250 °C for 5 h.

Table 3 provides an overview of the different catalysts used, as well as their metal loading in the depolymerization reaction, relative to the weight of the polycarbonate. Table 3 also shows the results of the reaction according to example 3, in terms of conversion (X, %), as determined by precipitation of the remaining polycarbonate in methanol, as well as selectivity for the monomer (S_{BPA}, %), compared to BPA dimers and trimers (S_{BPA+}, %), and 4-cumylphenol (S_{BPA-}, %), as determined by GC, for each of the different catalysts.

**Table 3**

| **Example** | **Catalyst** | **Metal loading (wt.%)** | **X (%)** | **S_{BPA} (%)** | **S_{BPA-} (%)** | **S_{BPA+} (%)** |
|---|---|---|---|---|---|---|
| 3a | 5Ni⁰/Al₂O₃ - 500 | 0.5 | 91 | 20 | 78 | 2 |
| 3b | 10Ni⁰/Al₂O₃ - 500 | 0.5 | 100 | 41 | 49 | 10 |
| 3c | 15Ni⁰/Al₂O₃ - 500 | 0.5 | 100 | 38 | 50 | 12 |
| 3d | 20Ni⁰/Al₂O₃ - 500 | 0.5 | 91 | 35 | 53 | 12 |
| 3e | 5Ru⁰/Al₂O₃ | 1.0 | 100 | 45 | 53 | 2 |
| 3f | 5Pd⁰/Al₂O₃ | 1.0 | 100 | 22 | 76 | 2 |
| 3g | 10Ni⁰/Al₂O₃ - 500 | 1.0 | 100 | 72 | 2 | 26 |
| 3h | 15Ni⁰/Al₂O₃ - 500 | 1.0 | 100 | 48 | 40 | 12 |
| 3i | 10Ni⁰/Al₂O₃ - 500 | 1.5 | 100 | 40 | 11 | 49 |
| 3j | 15Ni⁰/Al₂O₃ - 500 | 1.5 | 100 | 59 | 27 | 14 |

### Example 4

End-of-life BPA polycarbonate roof panels were shredded, washed with water, and dried by vacuum-drying at 45 °C for 16 h. The dried polycarbonate was then subjected to depolymerization conditions according to example 3, with 1.0 wt.% metal loading of 10Ni⁰/Al₂O₃ -500.

Table 4 shows the results of the reaction according to example 4, compared to example 3g, in terms of conversion (X, %), as determined by precipitation of the remaining polycarbonate in methanol, as well as selectivity for the monomer (S_{BPA}, %), compared to BPA dimers and trimers (S_{BPA+}, %), and 4-cumylphenol (S_{BPA-}, %), as determined by GC.

**Table 4**

| **Example** | **Catalyst** | **Metal loading (wt.%**) | **X (%)** | **S_{BPA} (%)** | **S_{BPA-} (%)** | **S_{BPA+} (%)** |
|---|---|---|---|---|---|---|
| 3g | 10Ni⁰/Al₂O₃ - 500 | 1.0 | 100 | 72 | 2 | 26 |
| 4a | 10Ni⁰/Al₂O₃ - 500 | 1.0 | 100 | 65 | 15 | 20 |

It can be seen from table 4 that reductive depolymerization of virgin BPA polycarbonate, compared to end-of-life BPA polycarbonate, provides similar results in terms of conversion and selectivity for the BPA monomer.

### Example 5

The catalyst used in example 3g was separated, washed with THF, dried, and reused under the same conditions as example 3g (run 2). This process was repeated one more time (run 3).

Table 5 shows the results of the 2 additional runs according to example 5, compared to example 3g, in terms of conversion (X, %), as determined by precipitation of the remaining polycarbonate in methanol, as well as selectivity for the monomer (S_{BPA}, %), compared to BPA dimers and trimers (S_{BPA+}, %), and 4-cumylphenol (S_{BPA-}, %), as determined by GC.

**Table 5**

| **Example** | **Catalyst** | **Metal loading (wt.%)** | **X (%)** | **S_{BPA} (%)** | **S_{BPA-} (%)** | **S_{BPA+} (%)** |
|---|---|---|---|---|---|---|
| 3g | 10Ni⁰/Al₂O₃ - 500 | 1.0 | 100 | 72 | 2 | 26 |
| 5a | 10Ni⁰/Al₂O₃ - 500 | 1.0 | 100 | 63 | 10 | 27 |
| 5b | 10Ni⁰/Al₂O₃ - 500 | 1.0 | 100 | 62 | 11 | 27 |

It can be seen from table 5 that the heterogeneous nickel catalyst can be reused multiple times, with only a limited loss of selectivity for the monomer (BPA).

### Example 6

To compare the performance of a commercial heterogeneous metal catalyst, and a heterogeneous nickel catalyst as prepared in example 2, in the reductive depolymerization of polycarbonate under transfer hydrogenation conditions, a reaction vessel was charged with 4 g of polycarbonate, heterogeneous metal catalyst, and 36 g of isopropyl alcohol (IPA). After dissolution of the polycarbonate in the solvent, the reaction vessel was flushed with Ar, closed, and heated to 200 °C for 5 h under autogenous pressure.

Table 6 provides an overview of the different catalysts used, as well as their metal loading in the depolymerization reaction, relative to the weight of the polycarbonate. Table 6 also shows the results of the reaction, according to example 6, in terms of conversion (X, %), as determined by precipitation of the remaining polycarbonate in methanol, as well as selectivity for the monomer (S_{BPA}, %), compared to BPA dimers and trimers (S_{BPA+}, %), and 4-cumylphenol (S_{BPA-}, %), as determined by GC, for each of the different catalysts.

**Table 6**

| **Example** | **Catalyst** | **Metal loading (wt.%)** | **X (%)** | **S_{BPA} (%)** | **S_{BPA-} (%)** | **S_{BPA+} (%)** |
|---|---|---|---|---|---|---|
| 6a | 5Ru/Al₂O₃ | 0.05 | 81 | n.d. | n.d. | n.d. |
| 6b | 10Ni⁰/Al₂O₃ - 500 | 0.05 | 100 | n.d. | n.d. | n.d. |

| | | | | | | |
|---|---|---|---|---|---|---|
| n.d. is not determined | | | | | | |

### Example 7

To compare the performance of different loadings of heterogeneous nickel catalysts as prepared in example 2, in the reductive depolymerization of polycarbonate under transfer hydrogenation conditions, a reaction vessel was charged with 5 g of polycarbonate, heterogeneous metal catalyst, and 45 g of isopropyl alcohol (IPA). After dissolution of the polycarbonate in the solvent, the reaction vessel was flushed with Ar, closed, and heated to 250 °C for 5 h under autogenous pressure.

Table 7 shows the results of the reaction according to example 7, with different metal loadings, relative to the weight of the polycarbonate, in terms of conversion (X, %), as determined by precipitation of the remaining polycarbonate in methanol, as well as selectivity for the monomer (S_{BPA}, %), compared to BPA dimers and trimers (S_{BPA+}, %), and 4-cumylphenol (S_{BPA-}, %), as determined by GC.

**Table 7**

| **Example** | **Catalyst** | **Metal loading (wt.%)** | **X (%)** | **S_{BPA} (%)** | **S_{BPA-} (%)** | **S_{BPA+} (%)** |
|---|---|---|---|---|---|---|
| 7a | 10Ni⁰/Al₂O₃ - 500 | 1 | 100 | 10 | n.d. | n.d. |
| 7b | 10Ni⁰/Al₂O₃ - 500 | 0.1 | 100 | 99 | n.d. | n.d. |
| 7c | 10Ni⁰/Al₂O₃ - 500 | 0.05 | 100 | n.d. | n.d. | n.d. |
| 7d | 10Ni⁰/Al₂O₃ - 500 | 0.01 | 100 | n.d. | n.d. | n.d. |

| | | | | | | |
|---|---|---|---|---|---|---|
| n.d. is not determined | | | | | | |

### Example 8

To compare the performance of different amounts of the hydrogen donor in the organic solvent (mixture), in the reductive depolymerization of polycarbonate under transfer hydrogenation conditions, a reaction vessel was charged with 5 g of polycarbonate, heterogeneous nickel catalyst as prepared in example 2, and 45 g of organic solvent mixture. After dissolution of the polycarbonate in the solvent, the reaction vessel was flushed with Ar, closed, and heated to 250 °C for 5 h under autogenous pressure. In example 8a, an IPA/THF mixture was used with 14 wt.% IPA. In example 8b, a FA/THF mixture was used with 11 wt.% FA.

Table 8 shows the results of the reaction according to example 8, compared to 100 wt.% IPA (example 6b), as well as their metal loading, relative to the weight of the polycarbonate, in terms of conversion (X, %), as determined by precipitation of the remaining polycarbonate in methanol, as well as selectivity for the monomer (S_{BPA}, %), compared to BPA dimers and trimers (S_{BPA+}, %), and 4-cumylphenol (S_{BPA-}, %), as determined by GC.

**Table 8**

| **Example** | **Catalyst** | **Metal loading (wt.%)** | **X (%)** | **S_{BPA} (%)** | **S_{BPA-} (%)** | **S_{BPA+} (%)** |
|---|---|---|---|---|---|---|
| 7b | 10Ni⁰/Al₂O₃ - 500 | 0.1 | 100 | 99 | n.d. | n.d. |
| 8a | 10Ni⁰/Al₂O₃ - 500 | 0.1 | 100 | 42 | n.d. | n.d. |
| 8b | 10Ni⁰/Al₂O₃ - 500 | 0.1 | 100 | n.d. | n.d. | n.d. |

| | | | | | | |
|---|---|---|---|---|---|---|
| n.d. is not determined | | | | | | |

### Example 9

To determine the influence of a hydrogen (H₂) atmosphere, in the reductive depolymerization of polycarbonate under mixed 'classical' and transfer hydrogenation conditions, a reaction vessel was charged with 4 g of polycarbonate, a commercial heterogeneous metal catalyst or heterogeneous nickel catalyst as prepared in example 2, and 36 g of isopropyl alcohol (IPA). After dissolution of the polycarbonate in the solvent, the reaction vessel was pressurized with H₂ (20 bar), closed, and heated to 200 °C for 5 h.

Table 9 shows the results of the reaction according to example 9, as well as their metal loading, relative to the weight of the polycarbonate, in terms of conversion (X, %), as determined by precipitation of the remaining polycarbonate in methanol, as well as selectivity for the monomer (S_{BPA}, %), compared to BPA dimers and trimers (S_{BPA+}, %), and 4-cumylphenol (S_{BPA-}, %), as determined by GC.

**Table 9**

| **Example** | **Catalyst** | **Metal loading (wt.%)** | **X (%)** | **S_{BPA} (%)** | **S_{BPA-} (%)** | **S_{BPA+} (%)** |
|---|---|---|---|---|---|---|
| 9a | 5Ru/Al₂O₃ | 1 | 87 | n.d. | n.d. | n.d. |
| 9b | 10Ni⁰/Al₂O₃ - 500 | 0.05 | 100 | n.d. | n.d. | n.d. |

| | | | | | | |
|---|---|---|---|---|---|---|
| n.d. is not determined | | | | | | |

### Comparative Example A

A comparative experiment was performed without catalyst, by charging a reaction vessel with 4.0 g of polycarbonate, and 36 g of isopropyl alcohol (IPA). After dissolution of the polycarbonate in the solvent, the reaction vessel was flushed with Ar, closed, and heated to 200 °C for 2.5 h under autogenous pressure.

Under these conditions, a conversion of only 3 %, as determined by precipitation of the remaining polycarbonate in methanol, was obtained.

## Claims

1. A method for reductive depolymerization of a polymer composition containing polycarbonate, the method comprising the step of:
a) heating a mixture of the polymer composition containing polycarbonate, an organic solvent, a heterogeneous metal catalyst, and a source of H₂, for a first reaction time of at least 1 hour, at a first reaction temperature of at least 100 °C;
wherein the heterogeneous metal catalyst comprises a metal selected from Ni, Ru, Rh, Ir, Pd, and Pt, and a support material.

2. Method as claimed in claim 1, wherein the support material comprises alumina, in particular wherein the support material is selected from alumina (Al₂O₃) and silica/alumina (SiO₂/Al₂O₃).

3. Method as claimed in claim 1 or 2, wherein the loading of the metal in the heterogeneous metal catalyst is at least 0.5 wt.%, based on the total weight of the heterogeneous catalyst, preferably at least 1 wt.%, more preferably from 2 to 70 wt.%, even more preferably from 3 to 50 wt.%, yet even more preferably from 4 to 20 wt.%, yet even more preferably from 5 to 15 wt.%, most preferably from 7.5 to 12.5 wt.%.

4. Method as claimed in any one of claims 1 to 3, wherein the loading of the metal in step a) is at least 0.0001 wt.%, relative to the weight of the polycarbonate, preferably from 0.001 to 10 wt.%, more preferably from 0.01 to 5.0 wt.%, even more preferably from 0.25 to 2.0 wt.%, yet even more preferably from 0.5 to 1.5 wt.%.

5. Method as claimed in any one of claims 1 to 4, wherein the mixture in step a) is pressurized to an initial hydrogen (H₂) pressure from 1 to 40 bar preferably from 5 to 35 bar, more preferably from 10 to 30 bar, even more preferably from 15 to 25 bar, yet even more preferably from 18 to 22 bar; and subsequently heated.

6. Method as claimed in any one of claims 1 to 5, wherein the organic solvent comprises a hydrogen donor, such as isopropanol or formic acid, in particular wherein the hydrogen donor is the organic solvent.

7. Method as claimed in any one of claims 1 to 6, wherein the heterogeneous metal catalyst is a nickel (Ni) on alumina (Al₂O₃) catalyst; and wherein the loading of nickel, based on the total weight of the heterogeneous nickel on alumina catalyst, is from 5 to 15 wt.%.

8. A heterogeneous metal catalyst for reductive depolymerization of polymers, comprising nickel and a support material comprising alumina; and wherein the loading of nickel in the heterogeneous metal catalyst is from 1 to 60 wt.%, preferably from 2 to 55 wt.%, more preferably from 3 to 50 wt.%, even more preferably from 4 to 20 wt.%, yet even more preferably from 5 to 15 wt.%.

9. Catalyst as claimed in claim 8, wherein at least part of the nickel is present as metallic nickel (Ni°), in particular as metallic nickel particles, more in particular metallic nickel particles having an average particle size, as determined by TEM, from 3 to 6 nm, preferably from 3.5 to 5 nm, more preferably from 4 to 4.5 nm.

10. A method for preparing a heterogeneous nickel catalyst as claimed in claim 8 or 9, the method comprising the steps of:
a) impregnating a support material with an aqueous solution comprising nickel ions; and
b) calcining the impregnated support material at a calcining temperature of at least 400 °C, for a second reaction time of at least 2 hours, thereby providing the heterogeneous nickel catalyst;
wherein the amount of the nickel ions, relative to the weight of the support material, is from 1 to 60 wt.%, preferably from 2 to 55 wt.%, more preferably from 3 to 50 wt.%, even more preferably from 4 to 20 wt.%, yet even more preferably from 5 to 15 wt.%.

11. Method as claimed in claim 10, wherein the support material comprises alumina, in particular wherein the support material is alumina.

12. Method as claimed in claim 10 or 11, comprising the further steps of:
c) heating the heterogeneous nickel catalyst obtained in step b) in a reducing atmosphere to a maximal reduction temperature of at most 1000 °C for a first reduction time, thereby providing the heterogeneous catalyst, wherein at least part of the nickel is present as metallic nickel (Ni°); and
d) cooling down the heterogeneous catalyst obtained in step c).

13. Method as claimed in claim 12, wherein step c) further comprises maintaining the heterogeneous catalyst at the maximal reduction temperature for a second reduction time.

14. Method as claimed in 12 or 13, wherein in step c) the heterogeneous nickel catalyst obtained in step b) is heated under a flow of He and H₂; and wherein the flow of He and H₂ is independently selected from 20 to 200 sccm, preferably from 30 to 180 sccm, more preferably from 40 to 160 sccm, even more preferably from 50 to 150 sccm.

15. Use of a heterogeneous catalyst as claimed in claim 8 or 9, or as prepared by the method as claimed in claims 10 to 14, for the reductive depolymerization of polymers.
